# EUROPEAN PATENT SPECIFICATION

(11) **EP 2 404 741 B1**
(45) Date of publication and mention of the grant of the patent: **13.02.2013**
(21) Application number: 11173134.5
(22) Date of filing: 07.07.2011
(51) Int. Cl.: B29C 65/18, B29C 65/50, D06H 5/00, A41H 43/04, A41D 27/24

(54) **Machine and method to join or tape a fabric**
Maschine und Verfahren zum Verbinden oder Festkleben eines Stoffes
Machine et méthode pour unir ou appliquer une bande sur une étoffe

(30) Priority: 09.07.2010 IT MI20101270
(43) Date of publication of application: 11.01.2012
(73) Proprietor: MACPI S.p.A. PRESSING DIVISION, 25036 Palazzolo Sull'Oglio (Brescia) (IT)
(72) Inventor: Cartabbia, Giovanni, 24067 Sarnico (BG) (IT)
(74) Representative: Petraz, Gilberto Luigi

(56) References cited:
- US-A- 3 655 488
- US-A- 3 957 564
- US-A1- 2003 010 439

## Description

### FIELD OF THE INVENTION

The present invention concerns a machine to join or to tape a fabric, preferably a tubular fabric. In particular, the machine according to the present invention can be configured to join, by means of welding with adhesive, two edges of a fabric, for example to define a tube of fabric which can be used for a sleeve, or the leg of a pair of trousers. The machine according to the present invention can also be configured in order to apply, along the join line between two edges of fabric already assembled, a tape which can be welded by means of adhesive.

### BACKGROUND OF THE INVENTION

It is known to join two edges of fabric by means of welding with adhesive, or to apply a tape, by means of adhesive, along the join of two fabrics already assembled.

The welding can be carried out in open mode, that is, between two edges of fabric lying on a horizontal plane which are made to butt, or in closed mode, that is, between two opposite edges of fabric folded to overlap, so as to define a tubular conformation.

The welding operation between two edges of fabric is normally carried out by a machine provided with a welding unit to which the fabric is fed along a determinate work plane. One of the two edges of fabric has a distribution of adhesive material, normally thermoplastic polymers, the type of which varies according to the fabric and the applications required.

The welding operation in closed mode of two edges of fabric is usually carried out with manual means, such as an iron or ironing press provided with cantilevered shapes in order to be able to insert the fabric or fabrics in their tubular form. It is necessary to proceed in this way because, in order to carry out continuous welding, a solution has not yet been found which allows to obtain a good execution which avoids problems connected to the workability of the fabric and to the safety of the operators. Indeed the type of heating adopted has always been carried out above the work plane, while the lower part is not heated, because it is in contact with the hands of the operator. This, however, causes an unacceptable execution of the welding to join the edges of the fabric.

The use of a similar machine allows to tape two edges of fabric which have already been joined, using the heating action of the air on the adhesive material of the tape to be applied.

One disadvantage of this type of known machine is the micro climate generated by the overheated air which is generated in correspondence to the point where the fabric is fed, so that the operator has to work near a very hot environment with all the inconveniences and dangers which can derive.

Document US-A-2003/010439 describes a known machine to hermetically seal, by taping, the stitches of protective barrier fabrics such as those used for waterproof clothing. Purpose of the present invention is to make a machine to join or tape a fabric, preferably a tubular fabric, which allows to eliminate the disadvantages of the state of the art previously cited, which allows to improve the final quality of the finished product and with a simpler and quicker working.

Document US-A-3,957,564 discloses an apparatus for water tight seaming of flexible thermoplastic sheet material comprising a frame, a first stationary head assembly, a second head assembly, cooperating opposed drive roll means on said first and second head assemblies, reel means mounted on said frame and a heat gun mounted in said second head assembly.

Document US-A-3,655,488 discloses an apparatus for joining sheet material fed from supply rolls. In said apparatus, a dry monofilament adhesive is interfed between the materials in the area thereof to be joined and the material and the interfed adhesive are then concurrently compressed and subjected to radio frequency heating energy whereby the adhesive melts and covers the sheet areas to be joined. The adhesive hardens as the material advances beyond the vicinity of the radio frequency field and is rewound on a take-up roll.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a machine to join or tape two edges of fabric by means of adhesive, applied on one of the two edges or present on the tape to be applied, comprises a welding unit to which said two edges of fabric, adjacent to each other, are fed along a determinate work plane: in the case of joining the edges are overlapping, while in the case of taping they are already assembled. The welding unit is suitable to melt the adhesive exercising a heat pressure on the edges in order to determine the joining or taping operation of the two edges.

In accordance with the present invention the welding unit comprises:
- a first welding device disposed above the work plane and comprising a first tape, a first movement unit of the first tape and a first heating unit of the first tape;
- a second welding device disposed under the work plane and comprising a second tape, a second movement unit of the second tape and a second heating unit of the second tape.

The machine according to the present invention also comprises a support arm disposed under the work plane, inside which the second welding device is assembled, which comprises cooling means suitable to cool the external surface of the support arm which, during normal use, is heated by the second heating unit of the second welding device.

The machine according to the present invention, in order to join or tape a fabric, either in open mode or in closed mode, for natural fabrics such as cotton, or for mixed or synthetic fabrics, allows to obtain a better quality of the finished product, determining a uniform distribution of heat during the heating action, both from above and from below the fabric which is being worked. It is advantageous, above all, in the case of fabrics which are natural heat insulators, and especially in the case of thick fabrics.

Moreover, thanks to the cooling, the machine according to the present invention is safe and comfortable for the operator, because it avoids the risk of operating in close contact with excessively hot parts or areas and therefore of burns or accidents. Furthermore the cooling of the external parts of the support arm, which is also used as an auxiliary element for the introduction of the fabric, avoids excessive heat on the fabric, which could cause an unwanted shiny effect.

This is particularly advantageous when welding fabrics in closed mode, where, because of the tubular configuration of the fabric, the spaces where the operator can maneuver are reduced, and the risk of contact with hot parts is high.

In some forms of embodiment, the first heating unit and the second heating unit are substantially in direct contact respectively with the first tape and the second tape, in order to determine a direct heating by conduction.

In some forms of embodiment, the first heating unit comprises a first heating block or plane, made of metal, in which first heating electric resistances are drowned, and the second heating unit comprises a second heating block or plane, made of heating metal, in which second electric resistances are drowned.

In some forms of embodiment, the support arm comprises a first portion, substantially horizontal, in which the second heating unit of the second tape and part of the second tape and part of the second movement unit are housed, and a second portion, substantially vertical, in which the remaining parts of the second tape and of the second movement unit are housed, said ventilation unit being connected to the second portion.

In some forms of embodiment, the support arm comprises structural walls which define at least a housing compartment for the second tape, the second movement unit and for the second heating unit of the second tape.

A variant of this form of embodiment provides that the support arm comprises a casing which surrounds said structural walls, defining chambers external to the structural walls and directly connected with the ventilation unit for the passage of cooling air toward the second heating unit.

In some forms of embodiment, the first movement unit comprises at least a driven wheel to move the first tape and an idle wheel, around which the first tape is moved along a closed ring path.

In a variant of this form of embodiment, the first heating device is disposed between the driven wheel and the idle wheel of the first movement unit, in order to directly heat the first tape which is moved around them.

In some forms of embodiment, the second movement unit comprises at least a driven wheel to move the second tape and an idle wheel, around which the second tape is moved along a closed path.

In a variant of this form of embodiment, the second movement unit comprises counter wheels to determine the development of the second tape along the support arm, in particular along the first horizontal portion and the diversion toward the second vertical portion of the support arm.

In some variant embodiments, one counter wheel of the counter wheels is located in substantial correspondence with the idle wheel of the first movement unit, in order to cooperate in the introduction of the edges of the fabric into the welding unit.

Some forms of embodiment of the present invention provide a tilting device with levers by means of which to condition the position, angular or linear, of the first welding device with respect to the second welding device, so as to adapt to different operating needs.

A variant of the machine according to the present invention, configured for joining two edges of fabric, comprises a stopping member, comprising for example a needle or buffer, disposed immediately upstream of the welding unit, able to be driven so as to selectively determine the holding of the two edges of the fabric in a desired overlapping condition, propedeutic to the operation of joining the two edges.

A variant of the machine according to the present invention, configured for taping, that is, the application by means of adhesive of a tape onto two edges of fabric already assembled, comprises feed means to feed the tape and guide means to guide the tape toward the welding unit in coordination with the introduction of the fabric, in order to perform a taping operation of the edges of fabric without the aid of overheated air.

A variant of the taping machine comprises means to transfer adhesive onto said tape, if the tape used is not already provided with adhesive from the start.

In some forms of embodiment, the machine comprises first and second tensioning means in order to tension the first tape and the second tape respectively.

The present invention also concerns a method to join or tape two edges of fabric by means of adhesive, comprising a welding step, either to each other or with a suitable tape fed, of the two edges of the fabric, fed adjacent with respect to each other, along a determinate work plane. During the welding step the method provides to melt the adhesive present on one of the two edges, directly or positioned indirectly by the tape which carries the adhesive, exercising a pressure on the edges.

According to the present invention, the welding step provides to carry out a heating by means of hot tapes in direct contact with the fabric and a pressure on the edges of the fabric, possibly also on the tape for the taping operation, both from above the work plane and from below the work plane, simultaneously carrying out a cooling step by means of air ventilation directed toward the work plane, so as to reduce the temperature of the components used in the welding step so that it is not dangerous for the operator.

### BRIEF DESCRIPTION OF THE DRAWINGS

These and other characteristics of the present invention will become apparent from the following description of a preferential form of embodiment, given as a non-restrictive example with reference to the attached drawings wherein:

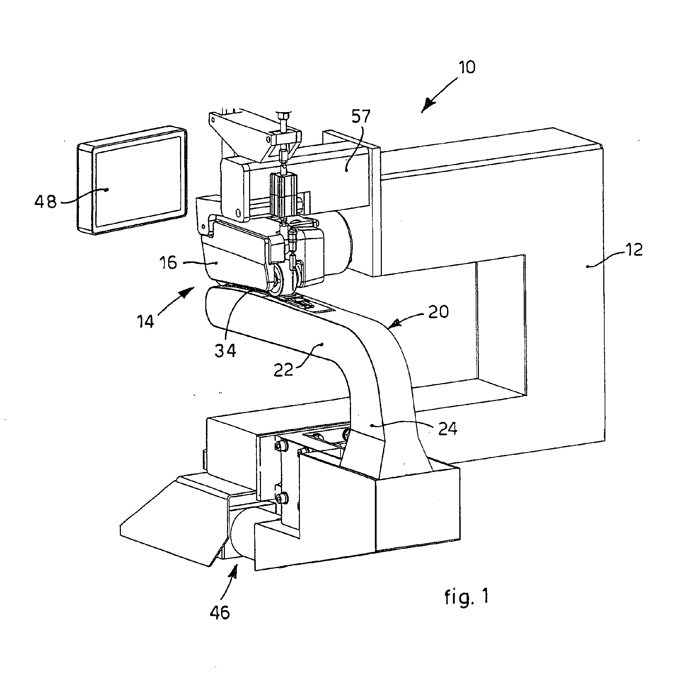

- fig. 1 is a perspective view of a machine according to the present invention;
- fig. 2 is a schematic lateral view of part of the machine in fig. 1;
- figs 2a, 2b and 2c are schematic views of operating positions of the machine in fig. 1;
- fig. 3 is a perspective view of part of the machine in fig. 1;
- fig. 4 is a schematic perspective view of part of the machine in fig. 1;
- fig. 5 is a section from V to V in fig. 4;
- fig. 6 is a perspective view of part of the machine in fig. 1 configured to join two edges of fabric;
- fig. 7 is an enlarged detail of fig. 6;
- fig. 8 is a variant of the enlarged detail in fig. 7;
- fig. 9 is a detail of a component of the machine in fig. 6;
- figs. 10a and 10b are schematic representations of two different types of join of edges of fabric using the machine in fig. 6;
- fig. 11 is a perspective view of part of the machine in fig. 1 configured to tape a fabric;
- figs. 12a, 12b and 12c are schematic representations of three different types of taping fabric using the machine in fig. 11.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF A PREFERENTIAL FORM OF

### EMBODIMENT

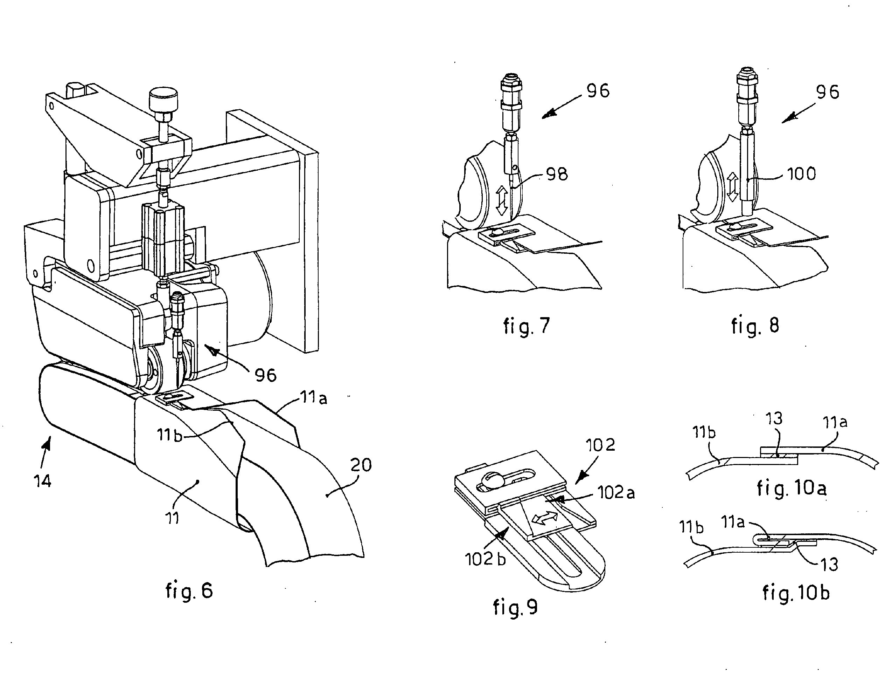

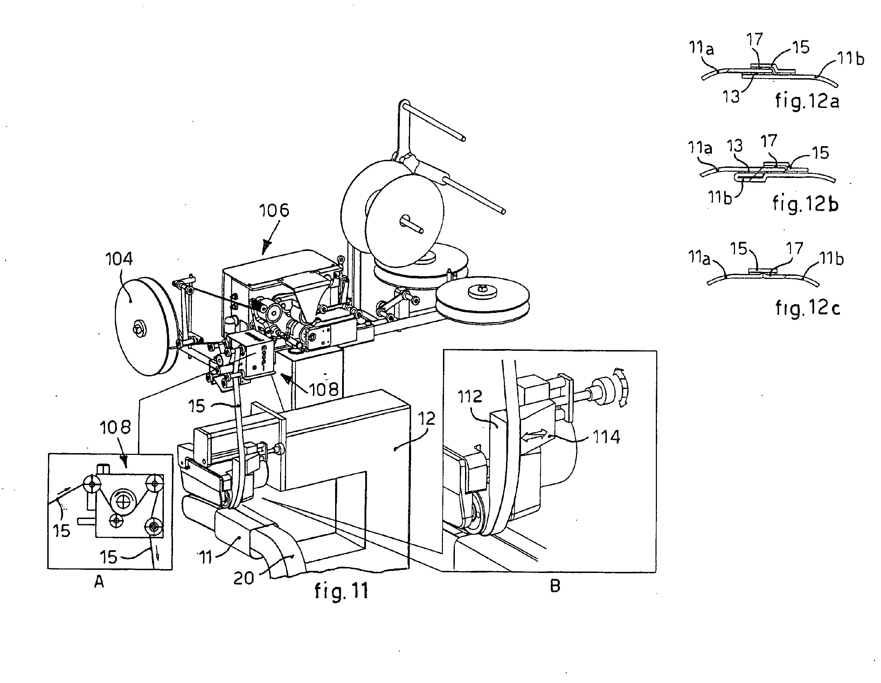

With reference to the attached drawings, a machine 10 according to the present invention is used to join a fabric 11, in particular two edges 1 1a, 11b of separate fabrics, as in fig. 6, or to tape two edges of fabric 11a, 11b already joined, as in fig. 11.

In the case of joining, which operation is also called assembly, the two edges 11a, 11b of fabric are welded by means of an adhesive 13, typically thermoplastic, which, already applied on one of the two edges 11a, 11b, is brought to melting and at the same time a pressure is applied of one edge to the other. This operation can be carried out in open mode, that is, with the two edges lying on a horizontal plane which are made to butt, or in closed mode, with the two edges folded in a tubular configuration.

In the case of taping, the two edges 11a, 11b are already assembled, even if generally the constraint which binds them does not guarantee the mechanical hold of the finished product; this is why they are taped; or instead a tape is welded, along their common interface, which tape carries an adhesive material 17, or has an adhesive material 17 transferred to it, which can be similar to the joining adhesive 13.

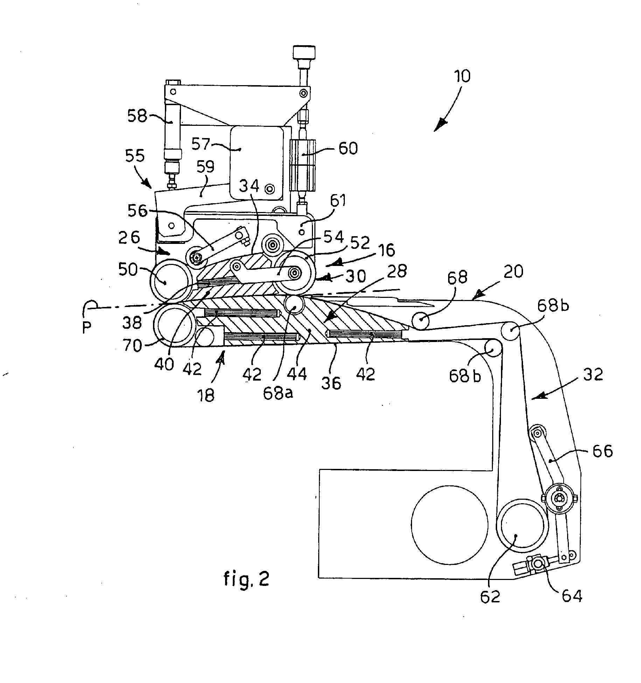

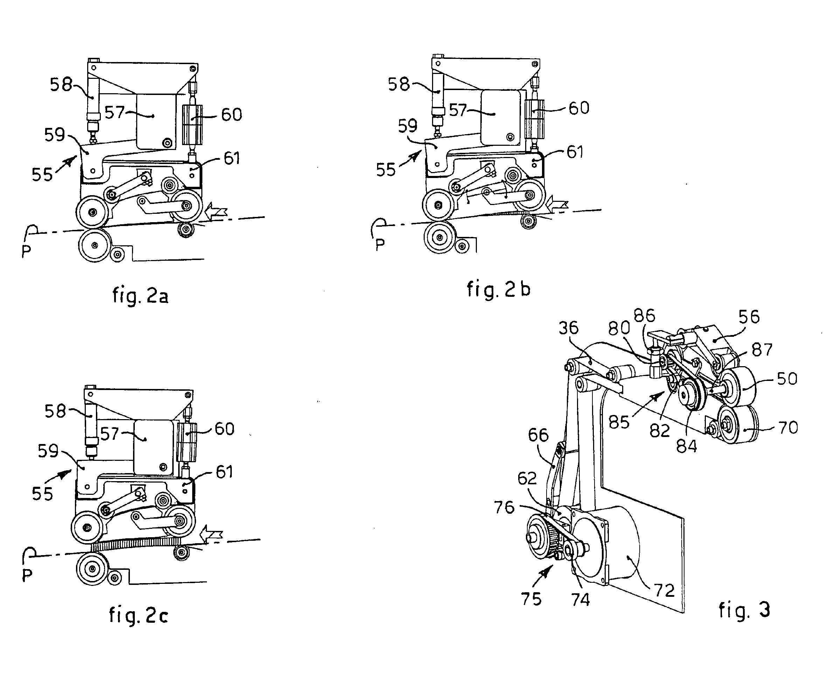

The machine 10 comprises a support frame 12 which positions a welding unit 14. The fabric 11 is fed toward the welding unit 14 along a determinate work plane P (fig. 2).

The welding unit 14 comprises a first welding device 16, positioned above the work plane P along which the fabric 11 is fed, and provided with a first tape 34 which is heated and moved along a first closed ring path which, for a determinate segment, develops substantially along part of said work plane P, slightly above it.

The welding unit also comprises a second welding unit 18 positioned below the work plane P and provided with a second tape 36 which is heated and moved along a second closed ring path which, for a determinate segment, develops substantially along part of the said work plane P, slightly below it.

The first tape 34 and the second tape 36 are made of a material suitable for heating to temperatures able to melt the adhesive 13, for example about 140 ― 200°C. In some forms of embodiment the first tape 34 and the second tape 36 are made of Kevlar fabric, covered in Teflon and loaded with carbon in order to disperse the electrostatic loads.

The machine 10 comprises a support arm 20, which supports and positions the second welding device 18. The support arm 20 has an external surface, on which the work plane P is defined.

In the form of embodiment shown, the support arm 20 is formed by a first portion 22, with a substantially horizontal development and which, in this case, defines the work plane P, and by a second portion 24 folded downward, with a substantially vertical development.

The welding unit 14 comprises a first heating device 26, disposed above the work plane P and configured to cooperate with the first welding device 16, in particular for heating the first tape 34.

The first heating device 26 comprises, in this case, a first heating block or plane 40, made of metal, around which the first tape 34 is moved, substantially in contact with the external surface of the first block so as to be directly heated.

In the first block 40 first electric resistances 38 are drowned, which can be activated to heat the first block 40 which, in its turn, directly heats the first tape 34 moved in a ring around it.

The welding unit 14 also comprises a second heating device 28, disposed under the work plane P and configured to cooperate with the second welding device 18,in particular for heating the second tape 36.

The second heating device 28 comprises, in this case, a second heating block or plane 44, made of metal, around which the second tape 36 is moved, substantially in contact with the external surface of the second block 44 so as to be directly heated.

In the second block 44 second electric resistances 42 are drowned, which can be activated to heat the second block 44 which, in its turn, directly heats the second tape 36 moved in a ring around it.

The first electric resistances 38 and the second electric resistances 42 are suitable to supply thermal energy such as to bring the first block 40 and the second block 44 to a temperature suitable for welding of about 140 ― 200°C.

The metal material of the first block 40 and of the second block 44 is, for example, a light magnesium aluminum alloy, the surface of which is treated to produce a covering of aluminum silicate in order to make it hard and to stop it getting dirty.

Furthermore, the welding unit 14 comprises a first movement unit 30, disposed above the work plane P; configured to move the first tape 34, and a second movement unit 32, disposed under the work plane P, configured to move the second tape 36.

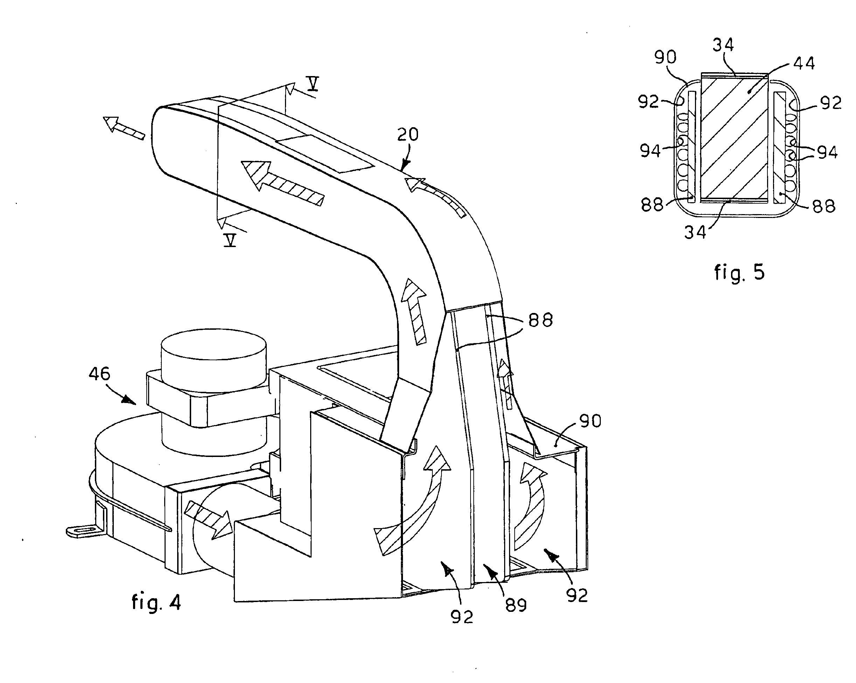

In this case, the second movement unit 32 develops largely inside the support arm 20. In the solution shown in the drawings, the support arm 20 comprises structural walls 88 (figs. 4 and 5), facing and distanced from each other so as to define a housing compartment 89 (fig. 4) in which the second movement unit 32 is located.

In some forms of embodiment, the structural walls 88 of the support arm 20 are covered by a casing 90, in this case made of metal sheet, distanced from the structural walls 88 so as to define chambers 92 (fig. 4); the casing 90 represents the external surface with which the operator comes into contact in normal operations, and which, according to the present invention, must be at least partly cooled in the zones where contact is most frequent and possible, in order to safeguard the safety of the operator, by means of suitable cooling means.

To this purpose, the machine 10 also comprises a ventilation unit 46, for example comprising a fan, which functions as a cooling mean by means of which to determine a stream of cooling air so as to cool at least part of the support arm 20, advantageously at least part of the first portion 22 which is in substantial correspondence with the welding unit 14 and which is in close contact, during normal use, with the operator. The ventilation unit 46 is connected in sealed manner with the support arm 20.

In particular, the ventilation unit 46 determines a forced ventilation of cooling air inside the chambers 92 made in the support arm 20, so that the air can pass (see fig. 4, where the arrows indicate the stream of cooling air). Thanks to the chambers 92, the desired part of the external surface of the support arm 20 is cooled. In this way, despite the fact that the internal part of the second heating block 44 reaches 180-200°C, the external surfaces with which the operator usually comes into contact during the feeding of the fabric 11 to the welding unit 14 are efficiently cooled.

In the front part of the first portion 22 of the support arm 20, the casing 90 has holes or fissures 94 through which the cooling air can exit (fig. 5).

The machine 10 comprises, in some forms of embodiment, a programmer or control unit 48, in this case with a touchscreen interface.

In this case, the first movement unit 30 comprises a driven wheel 50, which makes the first tape 34 rotate, and an idle counter wheel 52, both disposed aligned along the direction of feed of the fabric 11 on the work plane P, to complete the desired closed ring path.

The idle wheel 52 is positioned in the feed zone of the fabric 11 and in practice receives the fabric at inlet and draws it inside the welding unit 14, while the driven wheel 50 is disposed at the exit of the fabric 11.

In this case, the first heating block 40 is disposed comprised between the driven wheel 50 and the idle wheel 52, so as to be indirect contact with, or at least in close proximity to, a large part of the first tape 34 which moves in a ring, to achieve an effective heating.

The idle wheel 52 is made to tilt, in the case shown here, by means of a tilting lever 54 which is hinged to the first heating block 40. This is advantageous because it allows to compensate and adapt to the thicknesses of the fabric fed, which can vary on each occasion, and to exert an adequate pressure on the fabric always.

In this case, as can be seen in fig. 3, the first movement unit 30 comprises a drive pulley 80, driven by a motor (not visible in the drawings) which by means of a reducer unit 85, for example comprising a belt 82 driven by the drive pulley 80 and associated with a wheel 84, drives the driven wheel 50 by means of a shaft 87.

The first movement unit 30 also comprises a tensioning roll-lever 56, which can be driven by means of a tension presser 86 (fig. 3) to selectively determine a desired tension of the first tape 34.

In this case, again with reference to fig. 3, the second movement unit 32 disposed in the housing compartment 89 comprises a lower driven wheel 62, located in the second portion 24 of the support arm 20, and an idle wheel 70, disposed in correspondence with the exit of the fabric from the welding unit 14, directly under the driven wheel 50 of the first movement unit 30. The second tape 36 is made to move along a closed path between the driven wheel 62 and the idle wheel 70, and counter wheels 68, 68a, 68b are provided, of which one counter wheel 68a is disposed in the feed zone of the fabric, under the idle wheel 52, and two counter wheels 68b are disposed to determine a deviation of about 90° of the second tape 36 in its passage from the first portion 22 to the second portion 24 of the support arm 20. The counter wheel 68a and the idle wheel 70 protrude slightly from the support arm 20, in particular from the casing 90, so as to take the second tape 36 into cooperation with the fabric 11 being fed and with the first tape 34 and the upper wheels 50 and 52, thus determining both the pressing and the homogeneous heating of the fabric 11.

In the form of embodiment shown, the second heating block 44 is disposed comprised between the idle wheel 70 and the counter wheel 68a, so as to be indirect contact with, or at least in close proximity to, a large part of the second tape 36, to achieve an effective heating.

In this case, as can be seen in fig. 3, the second movement unit 32 comprises a drive pulley 74, driven by a motor 72 which by means of a reducer unit 75, for example comprising a belt 76 driven by the drive pulley 74 and associated with a wheel 78, drives the lower driven wheel 62.

In some forms of embodiment, the second movement unit 32 also comprises a tensioning roll-lever 66, which can be driven by means of a tension presser (fig. 2) to selectively determine a desired tension of the second tape 36.

The machine 10 comprises a tilting device with levers 55 for the selective lifting of the driven wheel 50, or of the idle wheel 52, or both. The tilting device with levers 55 is driven by linear actuators, in this case of the pneumatic type, such as a piston 58 and a double piston 60. The use of the double piston 60 is advantageous in that it allows to have a more precise control of the movement and the entity of the movement, even though pneumatic actuators are used.

The tilting device with levers 55 shown comprises a first upper lever 59 hinged on one side to a fixed support body 57 mounted on the support frame 12 and on the other side to the first movement unit 30, and a second lower lever 61 hinged on one side to the first upper lever 59 and on the other side to the first movement unit 30.

The linear actuators as above act selectively on the tilting device with levers 55 to position the driven wheel 50 and the idle wheel 52 in a raised or lowered position with respect to the work plane P and therefore to the first tape 34, depending on operating needs (figs. 2a-2c). In particular, the piston 58 acts on the first upper lever 59 causing it to be lowered (figs. 2a, 2b) or raised (fig. 2c), or on the second lower lever 61 to condition the lowering (fig. 2a) or lifting (figs. 2b, 2c) thereof.

The operating condition shown in fig. 2a, with both the wheels 50, 52 lowered, is normally used for pressing the material fed.

The operating condition shown in fig. 2b, with the driven wheel 50 lowered and the idle wheel 52 raised, is used for example for front tapering, to define a conical entrance for the fabric which prevents creases in pressing, especially in the case of heavy fabrics, and is used for the rear pressing of the material fed.

The operating condition shown in fig. 2c, with both the wheels 50, 52 raised, determines a complete opening of the passage, for example used for the passage of a very thick fabric, for working toweling material and soft material to avoid spoiling them with pressing.

The machine 10 according to the present invention, as we said, can be configured for joining two edges 11a, 11b of the fabric, working in both open mode and in closed mode. Normally, the adhesive 13 is first positioned on one of the two edges. Fig. 6 shows the machine 10 configured in this way, which comprises a stopping member 96 which can be selectively driven by the operator to clamp the two edges 11a, 11b of fabric positioned overlapping at entrance to the welding unit 14. In this way, the operator can leave the two edges at entrance to the welding unit 14, counting on the fact that they are held by the stopping member 96, and can take two other edges of fabric 11, positioning them overlapping. At this point, a command given by the operator causes the stopping member 96 to release the edges, and the fabric 11 is immediately fed forward by one step, for welding to be carried out. At the same time, the other edges overlapped by the operator are fed forward to the entrance to the welding unit 14, where they are stopped by the stopping member 96, and then continue as described above.

According to a variant, the stopping member 96 comprises a needle 98 (fig. 7), advantageous because, passing through the fabric 11, it defines a stable retention.

According to another variant, the stopping member 96 comprises a buffer element 100 (fig. 8) which presses on the fabric without making a hole, advantageous in cases where the fabric must not be holed, for example for fabrics which have to guarantee impermeability to air or water.

The machine 10 configured to join two edges 11a, 11b advantageously comprises a guide element 102 (fig. 9), disposed on the work plane P, immediately upstream of the welding unit 14, which has two channels 102a, 102b, for the guided introduction of the two edges 11a, 11b, so that they are positioned overlapping in a consistent manner.

Fig. 10a shows the result of a joining operation with an external edge-to-edge seam, while fig. 10b shows a join with hemming, also known in Italian as "English false join", where the adhesive is on the folded part.

Furthermore, as shown in fig. 11, the machine 10 can be configured to tape two edges 11a, 11b which are already assembled, that is, welding the tape 15 where the adhesive 17 is present, on both edges. The two edges 11a, 11b may be welded by means of thermoplastic adhesive, or by an ultrasound technique, traditional stitching or other joining techniques. Figs. 12a, 12b show two types, traditional and folded, of join using adhesive 13 for joining two edges 11a, 11b which are then welded with the tape 15, whereas fig. 12c shows the possible join, without adhesive 13 and using a shaped cut and ultrasound stitching of two edges 11a, 11b, which are then welded with the tape 15 too.

The machine 10 in the configuration in fig. 11 comprises a reel 104 to feed the tape 15, which is guided by a guide element 112 toward the entrance to the welding unit 14 where it is welded to the joined edges 11a, 11b in a similar way to that described above. The guide element 112 is associated with a movement slider 114 which allows it to be positioned correctly in a horizontal direction.

The tape 15 can be fed without adhesive 17, and in this case a device 106 is provided to transfer the adhesive 17 onto the tape 15: the device 106 is of a known type, for example as in the patent application EP-A-1.749.658 in the name of the present Applicant. Otherwise, the tape 15 can be purchased and supplied with the adhesive 17 already present on it, according to needs. In the machine 10 shown in fig. 11, a device 108 may be provided, of a known type, for the programmed tensioning of the tape 15. In operations to make nips, puckers and variations, the device 108 has the task of determining a desired tension on the tape 15 fed to the welding unit 14, independent of the tension that the tape 15 has downstream of the device 108, and thus is therefore not constrained by any unevenness and anomalies in the tension that can derive from the feed of the tape 15 or from the operation of transferring the adhesive, if envisaged. The effect is to maintain the tape 15 slack, normally with a tension of a few grams and, when required, to provide a desired tension in the desired position and for the desired length.

## Claims

1. Machine to join or tape two edges (11 a, 11b) of a fabric (11) by means of adhesive (13, 17) comprising a welding unit (14) to which said two edges (11 a, 11b) of fabric (11) are fed, adjacent or one overlapping the other, along a determinate work plane (P), which is suitable to melt said adhesive (13, 17) exerting a pressing on said edges (11a, 11b) in order to determine the operation of joining or taping of the two sides (11a, 11b), **characterized in that** the welding unit (14) comprises:
- a first welding device (16) disposed above the work plane (P) and comprising a first tape (34), a first movement unit (30) to move the first tape (34) and a first heating unit (26) to heat the first tape (34);
- a second welding device (18) disposed under the work plane (P) and comprising a second tape (36), a second movement unit (33) to move the second tape (36) and a second heating unit (28) to heat the second tape (36);
a support arm (20) being disposed under said work plane (P), said second welding device (18) being assembled inside said support arm (20), said support arm (20) comprising cooling means (46) suitable to cool its external surface which, during normal use, would be heated by the second heating unit (28) of the second welding device (18).

2. Machine as in claim 1, **characterized in that** the first heating unit (26) and the second heating unit (28) are substantially in direct contact respectively with the first tape (34) and with the second tape (36), in order to determine a direct heating by conduction.

3. Machine as in claim 1 or 2, **characterized in that** the first heating unit (26) comprises a first heating block or plane (40), made of metal, in which first heating electric resistances (38) are drowned, and the second heating unit (28) comprises a second heating block or plane (44), made of metal material, in which second electric resistances (42) are drowned.

4. Machine as in any claim hereinbefore, **characterized in that** the support arm (20) comprises a first portion (22), substantially horizontal, in which the second heating unit (28) of the second tape (36) and part of the second tape (36) and of the second movement unit (33) are housed, and a second portion (24), substantially vertical, in which the remaining part of the second tape (36) and of the second movement unit (33) are housed, said cooling means (46) being connected to said second portion (24).

5. Machine as in any claim hereinbefore, **characterized in that** the support arm (20) comprises structural walls (88) which define at least a housing compartment (89) for the second tape (36), the second movement unit (33) and for the second heating unit (28) of the second tape (36).

6. Machine as in claim 5, **characterized in that** the support arm (20) comprises a casing (90) which surrounds said structural walls (88), defining chambers (92) external to said structural walls (88) and directly connected with the ventilation unit (46) for the passage of the cooling air toward the second heating unit (28).

7. Machine as in any claim hereinbefore, **characterized in that** the first movement unit (30) comprises at least a driven wheel (50) to move the first tape (34) and an idle wheel (52), around which wheels the first tape (34) is moved along a closed ring path.

8. Machine as in claim 7, **characterized in that** the first heating device (26) is disposed between the driven wheel (50) and the idle wheel (52) of the first movement unit (30), in order to directly heat the first tape (34) which is moved around them.

9. Machine as in any claim hereinbefore, **characterized in that** the second movement unit (32) comprises at least a driven wheel (62) to move the second tape (36) and an idle wheel (70), around which the second tape (36) is moved along a closed path.

10. Machine as in claim 9, **characterized in that** the second movement unit (32) comprises counter wheels (68, 68a, 68b) to determine the development of the second tape (36) along the support arm (20).

11. Machine as in claims 7 and 10, **characterized in that** one counter wheel (68a) of said counter wheels (68, 68a, 68b) is located in substantial correspondence with the idle wheel (52) of the first movement unit (30), in order to cooperate in the introduction of the edges (11a, 11b) of fabric (11) into the welding unit (14).

12. Machine as in any claim hereinbefore, **characterized in that** it comprises a tilting device with levers (55) by means of which to condition the position, angular or linear, of the first welding device (16) with respect to the second welding device (18).

13. Machine as in any claim hereinbefore, **characterized in that** it comprises a stopping member (96), disposed immediately upstream of the welding unit (14), able to be driven so as to selectively determine the holding of the two edges (11a, 11b) of fabric (11) in a desired overlapping condition, propaedeutic to the operation of joining said two edges (11a, 11b).

14. Machine as in any claim from 1 to 12, **characterized in that** it comprises feeding means (104) to feed a tape (15) and guide means (112) to guide said tape (15) toward said welding unit (14) in order to perform a taping operation of said edges (11a, 11b) of fabric (11).

15. Method to join or tape two edges (11a, 11b) of a fabric (11) by means of adhesive (13, 17), comprising a step of welding said two edges (11a, 11b) of fabric (11) fed adjacent to each other, along a determinate work plane (P), during which said adhesive (13, 17) present on one of the two edges (11a, 11b) is melted, exerting a pressing on said edges (11a, 11b), **characterized in that** the welding step provides to carry out a heating by means of hot tapes (34, 36) in direct contact with the fabric (11) and a pressing on the edges (11a, 11b) of fabric (11) both from above the work plane (P) and from below the work plane (P), carrying out, at the same time, a cooling step by means of ventilation of air directed toward said work plane (P).

## Patentansprüche

1. Maschine zum Verbinden oder Verkleben zweier Ränder (11a, 11b) eines Stoffes (11) mittels Klebstoff (13, 17), umfassend eine Schweißeinheit (14), der die zwei Ränder (11a, 11b) aus Stoff (11), benachbart oder der eine den anderen überlappend, entlang einer vorbestimmten Arbeitsebene (P) zugeführt werden, und die geeignet ist, den Klebstoff (13, 17) zu schmelzen, wobei ein Druck auf die Ränder (11a, 11b) ausgeübt wird, um die Operation des Verbindens oder Verklebens der zwei Ränder (11a, 11b) zu bewirken, **dadurch gekennzeichnet, dass** die Schweißeinheit (14) umfasst:
- eine erste Schweißvorrichtung (16), die über der Arbeitsebene (P) angeordnet ist und ein erstes Band (34), eine erste Bewegungseinheit (30), um das erste Band (34) zu bewegen, und eine erste Heizeinheit (26), um das erste Band (34) zu erwärmen, umfasst;
- eine zweite Schweißvorrichtung (18), die unter der Arbeitsebene (P) angeordnet ist und ein zweites Band (36), eine zweite Bewegungseinheit (33), um das zweite Band (36) zu bewegen, und eine zweite Heizeinheit (28), um das zweite Band (36) zu erwärmen, umfasst;
wobei unter der Arbeitsebene (P) ein Tragarm (20) angeordnet ist, wobei die zweite Schweißvorrichtung (18) innerhalb des Tragarms (20) montiert ist, wobei der Tragarm (20) Kühlungsmittel (46) umfasst, die geeignet sind, seine äußere Oberfläche zu kühlen, welche während des normalen Betriebs durch die zweite Heizeinheit (28) der zweiten Schweißvorrichtung (18) erwärmt werden würde.

2. Maschine nach Anspruch 1, **dadurch gekennzeichnet, dass** die erste Heizeinheit (26) und die zweite Heizeinheit (28) im Wesentlichen in direktem Kontakt mit dem ersten Band (34) bzw. mit dem zweiten Band (36) sind, um eine direkte Erwärmung durch Konduktion zu bewirken.

3. Maschine nach Anspruch 1 oder 2, **dadurch gekennzeichnet, dass** die erste Heizeinheit (26) einen ersten Heizblock oder -ebene (40) umfasst, welcher bzw. welche aus Metall gefertigt ist, in das erste elektrische Heizwiderstände (38) eingebettet sind, und die zweite Heizeinheit (28) einen zweiten Heizblock oder -ebene (44) umfasst, welcher bzw. welche aus einem Metallmaterial gefertigt ist, in das zweite elektrische Widerstände (42) eingebettet sind.

4. Maschine nach einem der vorhergehenden Ansprüche, **dadurch gekennzeichnet, dass** der Tragarm (20) einen ersten, im Wesentlichen horizontalen Abschnitt (22), in welchem die zweite Heizeinheit (28) des zweiten Bandes (36) und ein Teil des zweiten Bandes (36) und der zweiten Bewegungseinheit (33) aufgenommen sind, und einen zweiten, im Wesentlichen vertikalen Abschnitt (24), in welchem der restliche Teil des zweiten Bandes (36) und der zweiten Bewegungseinheit (33) aufgenommen sind, umfasst, wobei die Kühlungsmittel (46) mit dem zweiten Abschnitt (24) verbunden sind.

5. Maschine nach einem der vorhergehenden Ansprüche, **dadurch gekennzeichnet, dass** der Tragarm (20) strukturelle Wände (88) umfasst, welche wenigstens einen Aufnahmeraum (89) für das zweite Band (36), die zweite Bewegungseinheit (33) und die zweite Heizeinheit (28) des zweiten Bandes (36) definieren.

6. Maschine nach Anspruch 5, **dadurch gekennzeichnet, dass** der Tragarm (20) ein Gehäuse (90) umfasst, das die strukturellen Wände (88) umgibt, das Kammern (92) außerhalb der strukturellen Wände (88) definiert, und das direkt mit der Belüftungseinheit (46) zum Durchlassen von Kühlluft zu der zweiten Heizeinheit (28) verbunden ist.

7. Maschine nach einem der vorhergehenden Ansprüche, **dadurch gekennzeichnet, dass** die erste Bewegungseinheit (30) wenigstens ein angetriebenes Rad (50), um das erste Band (34) zu bewegen, und ein Leerlaufrad (52) umfasst, um welche Räder das erste Band (34) entlang eines geschlossenen Ringpfades bewegt wird.

8. Maschine nach Anspruch 7, **dadurch gekennzeichnet, dass** die erste Heizvorrichtung (26) zwischen dem angetriebenen Rad (50) und dem Leerlaufrad (52) der ersten Bewegungseinheit (30) angeordnet ist, um direkt das erste Band (34), welches um diese herum bewegt wird, zu erwärmen.

9. Maschine nach einem der vorhergehenden Ansprüche, **dadurch gekennzeichnet, dass** die zweite Bewegungseinheit (32) wenigstens ein angetriebenes Rad (62), um das zweite Band (36) zu bewegen, und ein Leerlaufrad (70) umfasst, um welche das zweite Band (36) entlang eines geschlossenen Pfades bewegt wird.

10. Maschine nach Anspruch 9, **dadurch gekennzeichnet, dass** die zweite Bewegungseinheit (32) Gegenräder (68, 68a, 68b) umfasst, um den Verlauf des zweiten Bandes (36) entlang des Tragarms (20) zu bestimmen.

11. Maschine nach Ansprüche 7 und 10, **dadurch gekennzeichnet, dass** ein Gegenrad (68a) der Gegenräder (68, 68a, 68b) im Wesentlichen korrespondierend zu dem Leerlaufrad (52) der ersten Bewegungseinheit (30) angeordnet ist, um bei der Einführung der Ränder (11a, 11b) des Stoffes (11) in die Schweißeinheit (14) mitzuwirken.

12. Maschine nach einem der vorhergehenden Ansprüche, **dadurch gekennzeichnet, dass** sie eine Neigevorrichtung mit Hebeln (55) umfasst, mittels welcher die Winkel- oder lineare Position der ersten Schweißvorrichtung (16) hinsichtlich der zweiten Schweißvorrichtung (18) festgesetzt werden kann.

13. Maschine nach einem der vorhergehenden Ansprüche, **dadurch gekennzeichnet, dass** sie ein Stoppelement (96) umfasst, welches der Schweißeinheit (14) unmittelbar vorgelagert angeordnet ist, und welches derart betrieben wird, um selektiv die Halterung der zwei Ränder (11a, 11b) des Stoffes (11) in einem gewünschten, überlappenden Zustand festzulegen, in Vorbereitung auf die Operation des Zusammenfügens der zwei Ränder (11a, 11b).

14. Maschine nach einem der Ansprüche 1 bis 12, **dadurch gekennzeichnet, dass** sie Zuführmittel (104), um ein Band (15) zuzuführen, und Führungsmittel (112), um das Band (15) zu der Schweißeinheit (14) zu führen, umfasst, um eine Verklebungsoperation der Ränder (11a, 11b) des Stoffes (11) durchzuführen.

15. Verfahren zum Verbinden oder Verkleben zweier Ränder (11a, 11b) eines Stoffes (11) mittels Klebstoff (13, 17), umfassend einen Schritt eines Verschweißens der zwei Ränder (11a, 11b) des Stoffes (11), die benachbart zueinander entlang einer vorbestimmten Arbeitsebene (P) zugeführt werden, wobei währenddessen Klebstoff (13, 17), der auf einem der zwei Ränder (11a, 11b) vorhanden ist, geschmolzen wird, wobei ein Druck auf die Ränder (11a, 11b) ausgeübt wird, **dadurch gekennzeichnet, dass** der Schweißschritt das Durchführen einer Erwärmung mittels heißer Bänder (34, 36), die in direktem Kontakt mit dem Stoff (11) sind, und ein Drücken auf die Ränder (11a, 11b) des Stoffes (11) sowohl von oberhalb der Arbeitsebene (P), als auch von unterhalb der Arbeitsebene (P) bereitstellt, wobei gleichzeitig ein Kühlungsschritt mittels Ventilation von Luft, die zu der Arbeitsebene (P) gerichtet ist, ausgeführt wird.

## Revendications

1. Machine pour joindre ou coudre sur ruban deux bords (11a, 11b) d'une étoffe (11) au moyen d'un adhésif (13, 17) comprenant une unité de soudage (14) à laquelle lesdits deux bords (11a, 11b) d'étoffe (11) sont délivrés ; adjacents ou se chevauchant, le long d'un plan de travail déterminé (P) qui est adapté pour faire fondre ledit adhésif (13, 17) en exerçant une pression sur lesdits bords (11a, 11b) afin de déterminer l'opération de jonction ou de couture sur rubans des deux côtés (11a, 11b), **caractérisé en ce que** l'unité de soudage (14), comprend :
- un premier dispositif de soudage (16) disposé au-dessus du plan de travail (P) et comprenant un premier ruban (34), une première unité de mouvement (30) pour déplacer le premier ruban (34) et une première unité de chauffage (26) pour chauffer le premier ruban (34) :
- un second dispositif de soudage (18) disposé sous le plan de travail (P) et comprenant un second ruban (36), une seconde unité de mouvement (33) pour déplacer le second ruban (36) et une seconde unité de chauffage (28) pour chauffer le second ruban (36) ;
un bras de support (20) étant disposé sous ledit plan de travail (P), ledit second dispositif de soudage (18) étant assemblé à l'intérieur dudit bras de support (20), ledit bras de support (20) comprenant un moyen de refroidissement (46) adapté pour refroidir sa surface externe qui, en utilisation normale, serait chauffée par la seconde unité de chauffage (28) du second dispositif de soudage (18).

2. Machine selon la revendication 1, **caractérisée en ce que** la première unité de chauffage (26) et la seconde unité de chauffage (28) sont sensiblement en contact direct respectivement avec le premier ruban (34) et la second ruban (36) afin de déterminer un chauffage direct par conduction.

3. Machine selon la revendication 1 ou 2, **caractérisée en ce que** la première unité de chauffage (26) comprend un premier bloc ou plan de chauffage (4C), constitué de métal, dans lequel des premières résistances électriques de chauffage (38) sont insérées, et la seconde unité de chauffage (28) comprend un second bloc ou plan de chauffage (44), constitué d'un matériau métallique, dans lequel des secondes résistances électriques (42) sont insérées.

4. Machine selon l'une quelconque des revendications précédentes, **caractérisé en ce que** le bras de support (20) comprend une première portion (22), sensiblement horizontale, dans laquelle la seconde unité de chauffage (28) du second ruban (36) et une partie du second ruban (36) et de la seconde unité de mouvement (33) sont logées, et une seconde portion (24), sensiblement verticale, dans laquelle la partie restante du second ruban (36) et de la seconde unité de mouvement (33) sont logées, ledit moyen de refroidissement (46) étant raccordé à ladite seconde portion (24).

5. Machine selon l'une quelconque des revendications précédentes, **caractérisée en ce que** le bras de support (20) comprend des parois Structurelles (88) qui définissent au moins un compartiment de logement (89) pour le second ruban (36), la seconde unité de mouvement (33), et pour la seconde unité de chauffage (28) du second ruban (36).

6. Machine selon la revendication 5, **caractérisé en ce que** le bras de support (20) comprend un boîtier (90) qui entoure lesdites parois structurelles (88), définissant des chambres (92) externes auxdites parois structurelles (88) et directement raccordées à l'unité de ventilation (46) pour le passage de l'air de refroidissement vers la seconde unité de chauffage (28).

7. Machine selon l'une quelconque des revendications précédentes, **caractérisée en ce que** la première unité de mouvement (30) comprend au moins une roue entraînée (50) pour déplacer le premier ruban (34) et une roue folle (52), autour desquelles roues le premier ruban (34) est déplacé le long d'un chemin annulaire fermé.

8. Machine selon la revendication 7, **caractérisée en ce que** le premier dispositif de chauffage (26) est disposé entre la roue entraînée (50) et la roue folle (52) de la première unité de mouvement (30) afin de chauffer directement le premier ruban (34) qui est déplacé autour d'elles.

9. Machine selon l'une quelconque des revendications précédentes, **caractérisée en ce que** la seconde unité de mouvement (32) comprend au moins une roue entraînée (62) pour déplacer le second ruban (36) et une roue folle (70), autour de laquelle le second ruban (36) est déplacé le long d'un chemin fermé.

10. Machine selon la revendication 9, **caractérisée en ce que** la seconde unité de mouvement (32) comprend
des roues conjuguées (68, 68a, 69b) afin de déterminer le développement du second ruban (36) le long du bras de support (20).

11. Machine selon les revendications 7 et 10, **caractérisée en ce qu'**une roue conjuguée (68a) desdites roues conjuguées (68, 68a, 68b) est située sensiblement en correspondance avec la roue folle (52) de la première unité de mouvement (30), afin de coopérer dans l'introduction des bords (11a, 11b) d'une étoffe (11) dans l'unité de soudage (14).

12. Machine selon l'une quelconque des revendications précédentes, **caractérisée en ce qu'**elle comprend un dispositif d'inclinaison avec des leviers (55) au moyen desquels la position peut être conditionnée de façon angulaire ou linéaire, du premier dispositif de soudage (16) par rapport au second dispositif de soudage (18).

13. Machine selon l'une quelconque des revendications précédentes, **caractérisée en ce qu'**elle comprend un organe de butée (96), disposé immédiatement en amont de l'unité de soudage (14), capable d'être entraîné de façon à déterminer sélectivement le maintien des deux bords (11a, 11b) de l'étoffe (11) dans une condition de chevauchement souhaitée, propédeutique à l'opération de jonction desdits deux bords (11a, 11b).

14. Machine selon l'une quelconque des revendications 1 à 12, **caractérisée en ce qu'**elle comprend un moyen de délivrance (104) pour délivrer un ruban (15) et un moyen de guidage (112) pour guider ledit ruban (15) vers ladite unité de soudage (14) afin de réaliser une opération de couture sur ruban desdits bords (11a, 11b) de l'étoffe (11).

15. Procédé pour joindre ou coudre sur ruban deux bords (11a, 11b) d'une étoffe (11) au moyen d'un adhésif (13, 17) comprenant une étape de soudage desdits deux bords (11a, 11b) d'étoffe (11) délivrés de façon adjacente l'un à l'autre, le long d'un plan de travail déterminé (P) pendant lequel ledit adhésif (13, 17) présent sur l'un des deux bords (11a, 11b) est fondu, exerçant une pression sur lesdits bords (11a, 11b), **caractérisé en ce que** l'étape de soudage permet de réaliser un chauffage au moyen de rubans chauds (34, 36) en contact direct avec l'étoffe (11) et une pression sur les bords (11a, 11b) de l'étoffe (11) à la fois depuis le dessus du plan de travail (P) et depuis le dessous du plan de travail (P), réalisant, en même temps, une étape de refroidissement au moyen d'une ventilation d'air dirigée vers ledit plan de travail (P).
